# EUROPÄISCHE PATENTANMELDUNG

(11) **EP 1 810 639 A1**
(43) Veröffentlichungstag der Anmeldung: **25.07.2007**
(21) Anmeldenummer: 06025653.4
(22) Anmeldetag: 12.12.2006
(51) Int. Cl.: A61C 7/28, A61C 7/30

(54) **Orthodontische Befestigungsvorrichtung**

(30) Priorität: 18.01.2006 DE 102006003106
(71) Anmelder: DENTAURUM J.P. WINKELSTROETER KG, 75228 Ispringen (DE)
(72) Erfinder: Ehrenberger, Walter, 75236 Kämfelbach (DE)
(74) Vertreter: Hoeger, Stellrecht & Partner Patentanwälte

(57) **Zusammenfassung**

Die Erfindung betrifft eine orthodontische Befestigungsvorrichtung mit einem Bracket und einem Verriegelungsteil, wobei das Bracket eine Bracketbasis aufweist sowie einen Bracketkörper, der von der Bracketbasis absteht und einen von mesial nach distal verlaufenden Schlitz umfasst sowie zwei im Abstand zueinander angeordnete Flügelpaare, und wobei das Verriegelungsteil als Schwenkbügel ausgestaltet ist, der zwischen einer offenen, den Schlitz freigebenden Stellung und einer geschlossenen, den Schlitz übergreifenden Stellung um eine parallel zur Längsrichtung des Schlitzes ausgerichtete Schwenkachse schwenkbar am Bracket gelagert ist und der in der geschlossenen Stellung mit dem Bracket verrastbar ist. Um die orthodontische Befestigungsvorrichtung derart weiterzubilden, dass sie ein einfacheres Einbringen eines Bogendrahtes in den Schlitz ermöglicht, wird erfindungsgemäß vorgeschlagen, dass das Bracket einen koaxial zur Schwenkachse ausgerichteten Durchgang aufweist, der eine Lagerhülse ausbildet und in dem ein Lagerabschnitt des Schwenkbügels um die Schwenkachse drehbar gelagert ist.

## Beschreibung

Die Erfindung betrifft eine orthodontische Befestigungsvorrichtung mit einem Bracket und einem Verriegelungsteil, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordnete Flügelpaare, die jeweils einen in gingivale und einen in okklusale Richtung vom Schlitz abstehenden Flügel aufweisen, und wobei das Verriegelungsteil als Schwenkbügel ausgestaltet ist, der zwischen einer offenen, den Schlitz freigebenden Stellung und einer geschlossenen, den Schlitz übergreifenden Stellung um eine parallel zur Längsrichtung des Schlitzes ausgerichtete Schwenkachse schwenkbar am Bracket gelagert ist und der in der geschlossenen Stellung mit dem Bracket verrastbar ist.

Um im Rahmen einer kieferorthopädischen Behandlung Fehlstellungen von Zähnen zu korrigieren, ist es bekannt, an den Zähnen Brackets zu befestigen, die durch einen in den jeweiligen Schlitz der Brackets eingelegten elastischen Bogendraht miteinander verbunden werden. Über den Bogendraht können auf die Zähne Richtkräfte ausgeübt werden, so dass sich die Zahnstellung verändert. Zur Festlegung des Bogendrahtes im Schlitz der Brackets kommen häufig elastomere oder metallische Ligaturen zum Einsatz, die nach dem Einbringen des Bogendrahtes in den Schlitz an den Flügeln festgelegt werden, wobei sie den Schlitz übergreifen und dadurch den Bogendraht in den Schlitz drücken.

Aus der Gebrauchsmusterschrift DE 299 24 576 U1 ist eine orthodontische Befestigungsvorrichtung der eingangs genannten Art bekannt, die ein sogenanntes selbstligierendes Bracket ausbildet. Das bekannte Bracket weist im Bereich zwischen den beiden Flügelpaaren einen in okklusal-gingivale Richtung verlaufenden Durchgang auf, der die beiden Endabschnitte eines als Schwenkbügel ausgestalteten Verriegelungsteiles aufnimmt, die den Durchgang durchgreifen. Der Schwenkbügel weist mehrere geradlinige Teilbereiche auf, die über gebogene Segmente miteinander verbunden sind. In einer Ruhestellung liegt der Schwenkbügel mit einem parallel zur Schwenkachse ausgerichteten Abschnitt oberseitig auf den Flügeln auf. Zum Einbringen eines Bogendrahtes in den Schlitz muss der Schwenkbügel aufgerichtet werden, wobei er elastisch verformt wird und eine Rückstellkraft in Richtung seiner Ruhestellung ausübt. Nach dem Einbringen des Bogendrahtes kann der Schwenkbügel in seine geschlossene Stellung verschwenkt werden, wobei der parallel zur Schwenkachse ausgerichtete Abschnitt die freien Enden zweier Flügel untergreift. Hierzu werden die den Durchgang durchgreifenden Endabschnitte in Längsrichtung des Durchgangs verschoben. Die Endabschnitte weisen jeweils einen freien Endbereich auf, der schräg zur Längsrichtung des Schlitzes ausgerichtet ist und auf den Schwenkbügel bei dessen Übergang in seine geschlossene Stellung eine Rückstellkraft ausübt, durch die der parallel zur Schwenkachse ausgerichtete Abschnitt zuverlässig unterhalb der zugeordneten Flügeln festgelegt wird. Sowohl zum Öffnen als auch zum Schließen des Schwenkbügels muss dieser also ausgehend von seiner Ruhestellung mit einer Schwenkkraft beaufschlagt werden, durch die das Einbringen des Bogendrahtes erschwert wird.

Aufgabe der vorliegenden Erfindung ist es, eine orthodontische Befestigungsvorrichtung der eingangs genannten Art derart weiterzubilden, dass sie ein einfacheres Einbringen eines Bogendrahtes in den Schlitz ermöglicht.

Diese Aufgabe wird bei einer orthodontischen Befestigungsvorrichtung der gattungsgemäßen Art erfindungsgemäß dadurch gelöst, dass das Bracket einen koaxial zur Schwenkachse ausgerichteten Durchgang aufweist, der eine Lagerhülse ausbildet und in dem ein Lagerabschnitt des Schwenkbügels um die Schwenkachse drehbar gelagert ist.

Der bei der erfindungsgemäßen orthodontischen Befestigungsvorrichtung zum Einsatz kommende Schwenkbügel kann aufgrund der drehbaren Lagerung des Lagerabschnittes in der koaxial zur Schwenkachse ausgerichteten Lagerhülse ohne Kraftbeaufschlagung seine geöffnete Stellung beibehalten, so dass der Bogendraht auf einfache Weise in den Schlitz eingebracht werden kann. Die Lagerhülse wird von einem Durchgang gebildet, der sich in mesial-distaler Richtung erstreckt.

Die erfindungsgemäße orthodontische Befestigungsvorrichtung bildet ein selbstligierendes Bracket aus, das aus mindestens zwei Teilen besteht, nämlich aus dem Schwenkbügel und dem Bracket. Der Schwenkbügel bildet ein Federelement aus und dient als Verriegelungsteil für den Schlitz, nachdem in den Schlitz ein Bogendraht eingebracht wurde. Der Schwenkbügel kann zwischen einer offenen Stellung und einer geschlossenen Stellung hin und her verschwenkt werden, wobei er in der geschlossenen Stellung mit dem Bracket verrastet werden kann. Der Lagerabschnitt des Schwenkbügels ist im koaxial zur Schwenkachse ausgerichteten Durchgang des Brackets drehbar gelagert, so dass der Schwenkbügel auf einfache Weise um die Schwenkachse verschwenkt werden kann.

Der elastisch verformbare Schwenkbügel übt in seiner geschlossenen Stellung eine Haltekraft auf das Bracket aus, so dass er ausgehend von seiner geschlossenen Stellung nicht ohne weiteres in seine offene Stellung überführt werden kann, vielmehr muss hierzu vom Kieferorthopäden beispielsweise mittels eines Werkzeuges eine die Haltekraft überwindende Schwenkkraft ausgeübt werden.

Der Einsatz der orthodontischen Befestigungsvorrichtung in Form eines selbstligierenden Brackets ermöglicht es, Zahnbewegungen friktionsärmer durchzuführen, wobei zur Korrektur der Zahnstellung verhältnismäßig kleine Kräfte auf den Zahn ausgeübt werden können, so dass die Gefahr einer Wurzelresorption gering gehalten werden kann. Die erfindungsgemäße orthodontische Befestigungsvorrichtung kann sehr kompakt ausgestaltet sein, so dass sie nur eine kleine Baugröße aufweist. Dadurch kann das Risiko einer Demineralisierung vermindert werden und der Patientenkomfort kann gesteigert werden. Hinzu kommt, dass durch den Einsatz der erfindungsgemäßen orthodontischen Befestigungsvorrichtung die Behandlungszeit beim Wechsel des Bogendrahtes ganz erheblich reduziert werden kann. Der Schwenkbügel ermöglicht ein schnelles Öffnen und Verschließen des Schlitzes, ohne dass der Einsatz einer üblichen Ligatur erforderlich ist. Derartige Ligaturen können jedoch bei speziellen Behandlungsverfahren ohne weiteres ergänzend zum Einsatz kommen, da die erfindungsgemäße orthondontische Befestigungsvorrichtung die entsprechenden Befestigungsmöglichkeiten für zusätzliche Ligaturen aufweist.

Von Vorteil ist es, wenn der Lagerabschnitt den Durchgang durchgreift und der Schwenkbügel zumindest einen Verbindungsabschnitt aufweist, der sich an das distale oder das mesiale Ende des Lagerabschnitts anschließt und diesen mit einem mit dem Bracket verrastbaren Rastabschnitt des Schwenkbügels verbindet. Die Länge des Lagerabschnittes ist bei einer derartigen Ausführungsform größer gewählt als die Länge des Durchganges, so dass der Lagerabschnitt sowohl in mesialer als auch in distaler Richtung über den Durchgang hervorsteht. Zumindest eine der beiden Enden des Lagerabschnittes ist über ein sich an diesen anschließenden Verbindungsabschnitt mit dem verrastbaren Rastabschnitt des Schwenkbügels verbunden. Der Durchgang kann in okklusaler oder gingivaler Richtung versetzt zur Mittelachse des Schlitzes angeordnet sein und der Rastabschnitt kann in der geschlossenen Stellung des Schwenkbügels beispielsweise mit mindestens einem der Flügel verrasten, die auf der dem Lagerabschnitt abgewandten Seite des Schlitzes angeordnet sind.

Bei einer vorteilhaften Ausführungsform ist der Rastabschnitt über einen ersten Verbindungsabschnitt mit dem distalen Ende und über einen zweiten Verbindungsabschnitt mit dem mesialen Ende des Lagerabschnittes verbunden. An die beiden Enden des Lagerabschnittes schließt sich bei einer derartigen Ausgestaltung jeweils ein Verbindungsabschnitt des Schwenkbügels an, und die beiden Verbindungsabschnitte sind über den Rastabschnitt miteinander verbunden. Die Verbindungsabschnitte können den in den Schlitz eingefügten Bogendraht übergreifen und ihn dadurch im Schlitz festlegen.

Bei einer vorteilhaften Ausführungsform umfasst der Rastabschnitt zumindest ein parallel zur Schwenkachse ausgerichtetes Rastsegment, das mit dem Bracket verrastbar ist. Das parallel zur Schwenkachse ausgerichtete Rastsegment erstreckt sich parallel zur Schwenkachse und ist in der geschlossenen Stellung des Schwenkbügels auf der dem Durchgang abgewandten Seite des Schlitzes angeordnet.

Es kann vorgesehen sein, dass das mindestens eine parallel zur Schwenkachse ausgerichtete Rastsegment mit einem Sockel des Bracketkörpers oder auch mit der Bracketbasis verrastbar ist, von Vorteil ist es jedoch, wenn das zumindest eine parallel zur Schwenkachse ausgerichtete Rastsegment mit mindestens einem Flügel verrastbar ist. Beispielsweise kann das Rastsegment einen Flügel in der geschlossenen Stellung des Schwenkbügels untergreifen.

Bei einer bevorzugten Ausgestaltung bildet der Rastabschnitt ein einziges Rastsegment aus, das in der geschlossenen Stellung des Schwenkbügels die beiden Flügel untergreift, die auf der dem Durchgang abgewandten Seite des Schlitzes angeordnet sind. Beim Verschwenken des Schwenkbügels in seine geschlossene Stellung wird das Rastsegment über die freien Enden der dem Durchgang abgewandten Flügel herumgeführt unter elastischer Verformung des Schwenkbügels.

Es kann auch vorgesehen sein, dass der Rastabschnitt zwei parallel zur Schwenkachse ausgerichtete Rastsegmente aufweist, die jeweils mit dem Bracket verrastbar sind. Die beiden Rastsegmente können fluchtend zueinander angeordnet sein.

Günstig ist es, wenn die beiden parallel zur Schwenkachse ausgerichteten Rastsegmente jeweils mit einem Flügel verrastbar sind, insbesondere kann vorgesehen sein, dass die beiden parallel zur Schwenkachse ausgerichteten Rastsegmente in der geschlossenen Stellung des Schwenkbügels jeweils einen der beiden Flügel untergreifen, die auf der dem Durchgang abgewandten Seite des Schlitzes angeordnet sind.

Bei einer vorteilhaften Ausführungsform der erfindungsgemäßen orthodontischen Befestigungsvorrichtung umfasst der Rastabschnitt zumindest ein senkrecht zur Schwenkachse ausgerichtetes Rastsegment, das mit dem Bracket verrastbar ist. Hierbei kann vorgesehen sein, dass ein derartiges Rastsegment zusätzlich zu einem Rastsegment zum Einsatz kommt, das parallel zur Schwenkachse ausgerichtet ist.

Das mindestens eine senkrecht zur Schwenkachse ausgerichtete Rastsegment ist vorzugsweise mit einem Flügel verrastbar. Hierzu kann mindestens ein Flügel einen in mesialer oder in distaler Richtung vorstehenden Rastvorsprung aufweisen, der in der geschlossenen Stellung des Schwenkbügels mit dem senkrecht zur Schwenkachse ausgerichteten Rastsegment zusammenwirkt.

Von Vorteil ist es, wenn das mindestens eine senkrecht zur Schwenkachse ausgerichtete Rastsegment in der geschlossenen Stellung des Schwenkbügels zwischen den beiden Flügelpaaren angeordnet ist. Die Baugröße der erfindungsgemäßen orthodontischen Befestigungsvorrichtung kann dadurch besonders gering gehalten werden.

Von besonderem Vorteil ist es, wenn der Rastabschnitt des Schwenkbügels zwei senkrecht zur Schwenkachse ausgerichtete Rastsegmente umfasst, die jeweils mit dem Bracket verrastbar sind. Dadurch kann der Schwenkbügel in seiner geschlossenen Stellung eine besonders große Haltekraft auf das Bracket ausüben. Ein unbeabsichtigtes Öffnen des Schwenkbügels wird dadurch zuverlässig verhindert.

Günstig ist es, wenn die beiden senkrecht zur Schwenkachse ausgerichteten Rastsegmente jeweils mit einem Flügel verrastbar sind.

Es kann beispielsweise vorgesehen sein, dass die beiden Flügel, die auf der dem Durchgang abgewandten Seite des Schlitzes angeordnet sind, einander zugewandt jeweils einen Rastvorsprung aufweisen, der in der geschlossenen Stellung des Schwenkbügels mit einem senkrecht zur Schwenkachse ausgerichteten Rastelement zusammenwirkt. Im Bereich zwischen den beiden Flügelpaaren ist bei einer derartigen Ausgestaltung seitlich neben den beiden dem Durchgang abgewandten Flügeln jeweils ein Rastvorsprung angeordnet, der in der geschlossenen Stellung des Schwenkbügels von den senkrecht zur Schwenkachse ausgerichteten Rastsegmenten untergriffen wird.

Die Ausgestaltung des Rastabschnittes ist nicht auf parallel oder senkrecht zur Schwenkachse ausgerichtete Rastsegmente beschränkt. Es können auch schräg zur Schwenkachse ausgerichtete Rastsegmente zum Einsatz kommen. Außerdem können die Rastsegmente auch gekrümmt sein.

Eine besonders einfache Handhabung kann bei einer bevorzugten Ausgestaltung der erfindungsgemäßen orthodontischen Befestigungsvorrichtung dadurch erzielt werden, dass der Schwenkbügel ein Griffsegment umfasst, das in der geschlossenen Stellung des Schwenkbügels gingival oder okklusal vom Bracket absteht. Zum Verschwenken kann der Schwenkbügel am Griffsegment gehalten werden, ein zusätzliches Werkzeug zum Öffnen und Verschließen des Schwenkbügels kann dadurch entfallen.

Günstig ist es, wenn das Griffsegment ein Anzeigeelement zum Anzeigen der Ausrichtung des Befestigungselementes relativ zur Zahnachse aufweist. Das Griffsegment kann zum Beispiel pfeilförmig ausgestaltet sein und die Ausrichtung des Befestigungselementes relativ zur Zahnachse anzeigen.

Das Griffsegment verbindet bei einer bevorzugten Ausgestaltung zwei Rastsegmente miteinander. Die beiden Rastsegmente können hierbei senkrecht oder parallel zur Schwenkachse ausgerichtet sein. Von Vorteil ist es, wenn das Griffsegment zwei parallel zur Schwenkachse ausgerichtete Rastsegmente miteinander verbindet.

Vorzugsweise ist der Schwenkbügel in sich geschlossen ausgestaltet, denn dadurch kann dem Schwenkbügel eine hohe mechanische Belastbarkeit verliehen werden, und aufgrund des Wegfalls freistehender Enden des Schwenkbügels kann die Mundhygiene vereinfacht werden.

Vorzugsweise weist das Bracket zumindest ein Auflageelement auf, auf dem der Schwenkbügel in seiner geschlossenen Stellung aufliegt. Das mindestens eine Auflageelement bildet einen Endanschlag für den Schwenkbügel aus. Dadurch kann eine definierte Schlitzhöhe sichergestellt werden.

Das mindestens eine Auflageelement kann beispielsweise an der distalen bzw. mesialen Außenseite eines Flügels angeordnet sein. Unter der Außenseite eines Flügels wird hierbei die Seite des Flügels eines Flügelpaares verstanden, die den Flügeln des anderen Flügelpaares abgewandt ist.

Vorzugsweise liegt der Schwenkbügel mit einem Verbindungsabschnitt auf einem Auflageelement auf, wenn der Schwenkbügel seine geschlossene Stellung einnimmt.

Günstig ist es, wenn das mindestens eine Auflageelement eine Auflagefläche aufweist, die um die Materialstärke des Schwenkbügels gegenüber der Oberseite des unmittelbar benachbarten Flügels zurückgesetzt ist. Die Höhe der orthodontischen Befestigungsvorrichtung kann dadurch gering gehalten werden und den Patienten irritierende Vorsprünge können vermieden werden.

Vorzugsweise weist das Bracket zumindest zwei Auflageelemente auf, die an den einander abgewandten Außenseiten zweier Flügel angeordnet sind. Bei einer derartigen Ausgestaltung verläuft der Schwenkbügel im geschlossenen Zustand mesial und distal außerhalb der Flügel. Dadurch kann eine möglichst große Rotationskontrolle des Zahnes zur Korrektur einer Fehlstellung erreicht werden, da die Kraft des Bogendrahtes sowohl im mesialen als auch in distalen Bereich des Brackets einwirkt.

Bei einer besonders bevorzugten Ausführungsform ist an der distalen bzw. mesialen Außenseite jedes Flügels ein Auflageelement angeordnet. Dies hat den Vorteil, dass der Schwenkbügel in seiner geschlossenen Stellung zu beiden Seiten des Schlitzes auf einem Auflageelement aufliegt.

Das mindestens eine Auflageelement ist bei einer bevorzugten Ausgestaltung einstückig mit dem Bracketkörper, insbesondere einstückig mit einem unmittelbar benachbarten Flügel verbunden.

Das Bracket kann als einteiliger Formkörper ausgestaltet sein, der beispielsweise aus Metall, aus Keramik oder aus Kunststoff gefertigt ist.

Der den Lagerabschnitt aufnehmende Durchgang des Brackets erstreckt sich bei einer vorteilhaften Ausführungsform bezogen auf die mesial-distale Richtung lediglich im Bereich zwischen den beiden Flügelpaaren. Bevorzugt entspricht die Länge des Durchgangs im Wesentlichen dem Abstand zwischen den beiden Flügelpaaren. Hierzu kann zum Beispiel vorgesehen sein, dass im Bereich zwischen den beiden Flügelpaaren vom Bracketkörper okklusal oder gingival ein Lagerteil bogenförmig absteht, das den Lagerabschnitt des Schwenkbügels übergreift und in Kombination mit einem Abschnitt der Bracketbasis und/oder einem Sockel des Bracketkörpers eine Lagerhülse ausbildet.

Alternativ kann vorgesehen sein, dass sich der Durchgang bezogen auf die mesial-distale Richtung im Bereich zwischen den einander abgewandten Außenseiten der beiden Flügelpaare erstreckt, so dass die Länge des Durchganges im Wesentlichen der Erstreckung des Bracketkörpers in mesial-distaler Richtung entspricht.

Die nachfolgende Beschreibung zweier bevorzugter Ausführungsformen der Erfindung dient im Zusammenhang mit der Zeichnung der näheren Erläuterung. Es zeigen:
- Figur 1:: eine perspektivische Darstellung einer ersten Ausführungsform einer erfindungsgemäßen orthodontischen Befestigungsvorrichtung mit einem Schwenkbügel in offener Stellung;
- Figur 2:: eine weitere perspektivische Darstellung der orthodontischen Befestigungsvorrichtung gemäß Figur 1 mit dem Schwenkbügel in offener Stellung;
- Figur 3:: eine perspektivische Darstellung der Befestigungsvorrichtung gemäß Figur 1 mit dem Schwenkbügel in geschlossener Stellung;
- Figur 4:: eine perspektivische Darstellung einer zweiten Ausführungsform einer orthodontischen Befestigungsvorrichtung mit einem Schwenkbügel in offener Stellung und
- Figur 5:: eine perspektivische Darstellung der orthodontischen Befestigungsvorrichtung aus Figur 4 mit dem Schwenkbügel in geschlossener Stellung.

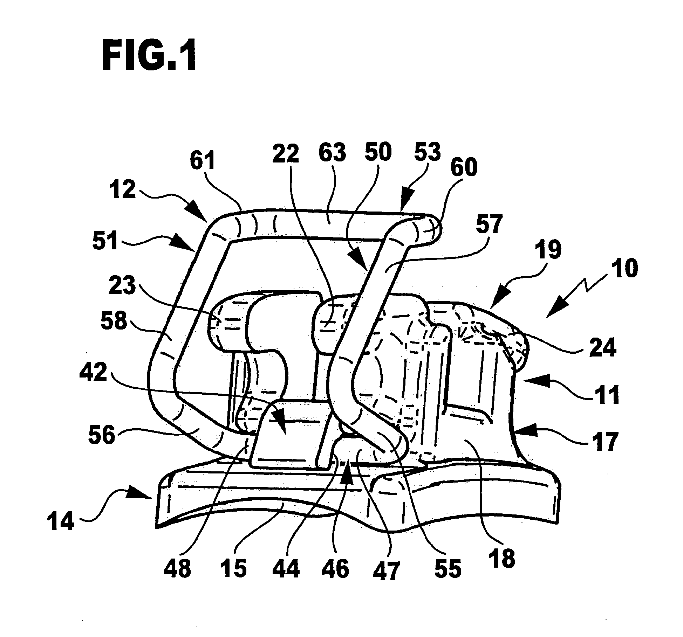

In den Figuren 1, 2 und 3 ist schematisch eine insgesamt mit dem Bezugszeichen 10 belegte erste Ausführungsform einer erfindungsgemäßen orthodontischen Befestigungsvorrichtung dargestellt. Diese umfasst ein Bracket 11 und ein Verriegelungsteil in Form eines Schwenkbügels 12, der als in sich geschlossener Drahtbügel ausgestaltet ist.

Das Bracket 11 weist eine Bracketbasis 14 auf, die mit einer Unterseite 15 in üblicher Weise an einem Zahn befestigt werden kann. Oberseitig trägt die Bracketbasis 14 einen Bracketkörper 17 mit einem Sockel 18 und mit einem ersten Flügelpaar 19 und einem zweiten Flügelpaar 20. Die beiden Flügelpaare 19, 20 weisen jeweils einen okklusalseitigen Flügel 22 bzw. 23 und einen gingivalseitigen Flügel 24 bzw. 25 auf. Zwischen den okklusalseitigen Flügeln 22, 23 und den gingivalseitigen Flügeln 24, 25 erstreckt sich in mesial-distaler Richtung ein Schlitz 27 zur Aufnahme eines an sich bekannten und deshalb in den Figuren 1, 2 und 3 nicht dargestellten Bogendrahtes.

An die distale Außenseite der Flügel 22 und 24 des ersten Flügelpaares 19 ist ebenso wie an die mesiale Außenseite der Flügel 23 und 24 des zweiten Flügelpaares 20 jeweils ein Auflageelement angeformt, wobei in den Figuren 1 bis 3 lediglich die an die Flügel 22, 24 und 23 angeformten Auflageelemente 29, 30 bzw. 31 dargestellt sind. Die Auflageelemente weisen oberseitig jeweils eine Auflagefläche 33, 34, 35 auf, die gegenüber der Oberseite 37, 38, 39, 40 des unmittelbar benachbarten Flügels 22, 24, 23, 25 um die Materialstärke des Schwenkbügels 12 zurückgesetzt ist.

Im Bereich zwischen den Flügelpaaren 19 und 20 ist okklusal an den Sockel 18 des Bracketkörpers 17 ein Lagerteil 42 angeformt, das zusammen mit der Oberseite der Bracketbasis 14 und der okklusalen Seite des Sockels 18 eine Lagerhülse in Form eines parallel zur Längsrichtung des Schlitzes 27 ausgerichteten Durchgangs 44 definiert. Letzterer wird von einem Lagerabschnitt 46 des Schwenkbügels 12 durchgriffen, der mit seinem distalen Ende 47 sowie mit seinem mesialen Ende 48 über den Durchgang 44 übersteht und jeweils einstückig verbunden ist mit einem L-förmigen Verbindungsabschnitt 50 bzw. 51 des Schwenkbügels 12. Die beiden Verbindungsabschnitte 50, 51 verbinden den Lagerabschnitt 46 mit einem Rastabschnitt 53 des Schwenkbügels 12. Die beiden Verbindungsabschnitte 50, 51 weisen jeweils einen ersten, rechtwinklig zum Lagerabschnitt 46 ausgerichteten Schenkel 55 bzw. 56 und einen zweiten Schenkel 57 bzw. 58 auf, und an die freien Enden der zweiten Schenkel 57, 58 schließt sich jeweils ein gebogenes Segment 60 bzw. 61 an, das die Verbindungsabschnitte 50 bzw. 51 mit einem parallel zum Lagerabschnitt 46 ausgerichteten Rastsegment 63 des Rastabschnittes 53 verbindet.

Der Lagerabschnitt 46 ist im Durchgang 44 um seine Längsachse frei drehbar und definiert mit seiner Längsrichtung eine Schwenkachse für den Schwenkbügel 12.

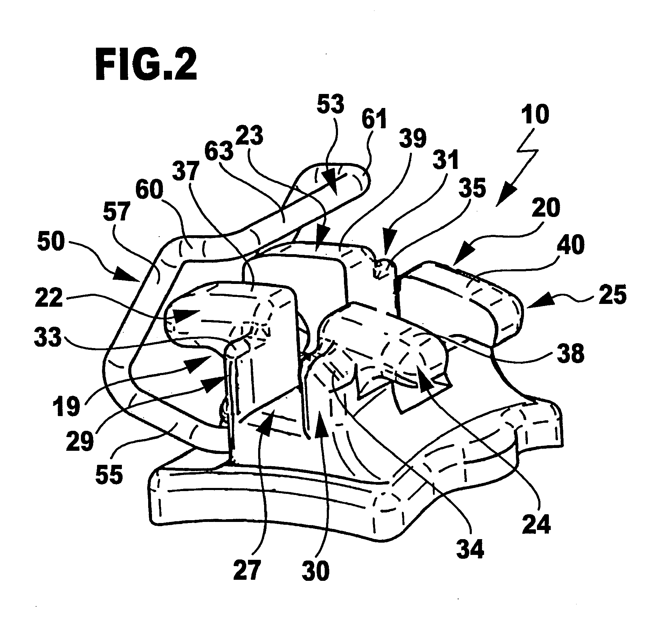

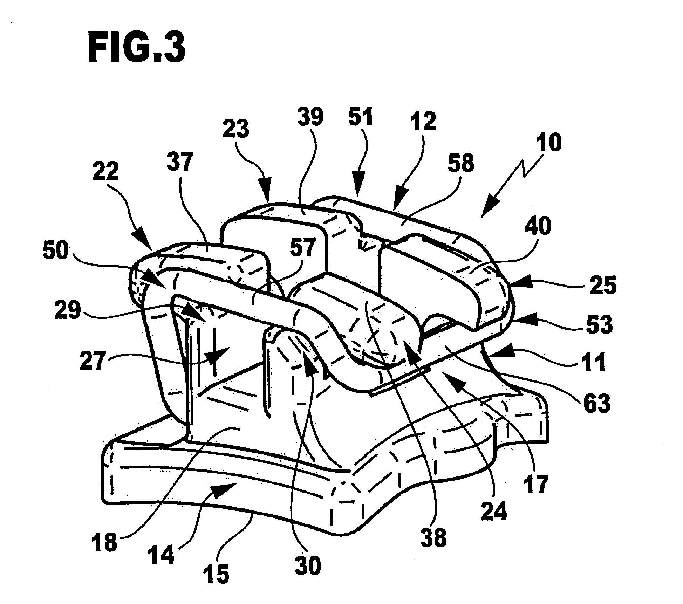

Der Schwenkbügel 12 kann zwischen einer in den Figuren 1 und 2 dargestellten offenen Stellung, in der er den Schlitz 27 freigibt, und einer in Figur 3 dargestellten geschlossenen Stellung, in der er mit den zweiten Schenkeln 57, 58 der Verbindungsabschnitte 50, 51 den Schlitz 27 übergreift, hin und her verschwenkt werden. In seiner geschlossenen Stellung liegt der Schwenkbügel 12 mit den Endbereichen der zweiten Schenkel 57, 58 sowie mit den gebogenen Segmenten 60, 61 auf den Auflageelementen 29, 30, 31, 32 auf, und das Rastsegment 63 untergreift die freien Enden der gingivalseitigen Flügel 24 und 25, die auf der dem Durchgang 44 abgewandten Seite des Schlitzes 27 angeordnet sind. Beim Übergang in die geschlossene Stellung wird der Schwenkbügel 12 elastisch verformt, so dass das Rastsegment 63 um die freien Enden der gingivalseitigen Flügel 24, 25 herumgeführt werden kann und mit diesen beiden Flügeln verrastet. Zum Öffnen des Schwenkbügels 12 wird dieser erneut elastisch verformt, um das Rastsegment 63 um die gingivalseitigen Flügel 24, 25 herumzuführen.

Mittels des Schwenkbügels 12 kann ein Bogendraht zuverlässig im Schlitz 27 gehalten werden. Durch das offene Design des Schwenkflügels 12 wird hierbei eine einfache Mundhygiene sichergestellt durch Reinigung des Brackets 11 und des Schwenkbügels 12. Durch die außenseitige Anlage des Schwenkbügels 12 an den Auflageelementen 29, 30, 31 und 32 wird der Bogendraht sowohl im mesialen Bereich als auch im distalen Bereich des Brackets 12 zuverlässig in den Schlitz 27 gedrückt. Dies hat eine verbesserte Rotationskontrolle bei der Kraftübertragung vom Bogendraht auf einen Zahn zur Folge, da die Kraft des Bogendrahtes sowohl mesial als auch distal einwirkt. Zusätzlich zum Schwenkbügel 12 können für spezielle Behandlungsverfahren elastomere oder metallische Ligaturen zum Einsatz kommen, die um die Flügel 22, 23, 24, 25 herumgeführt werden können.

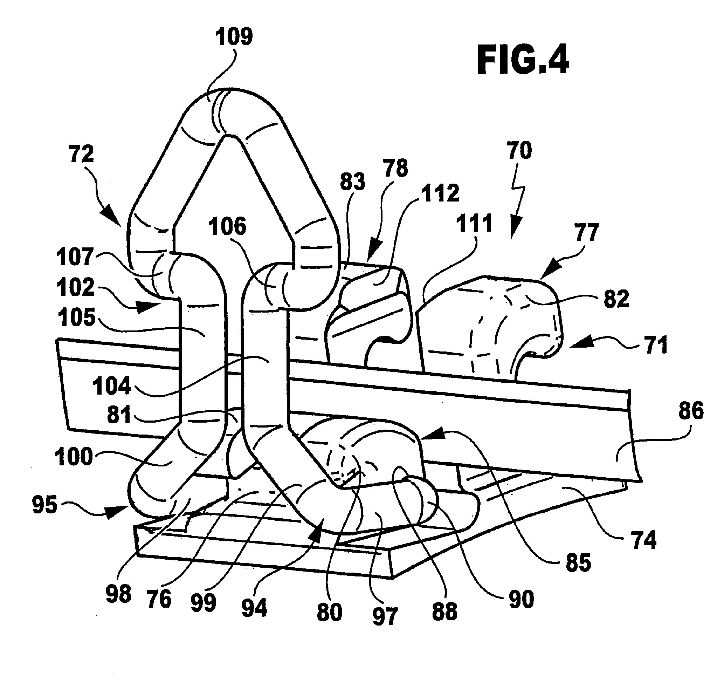

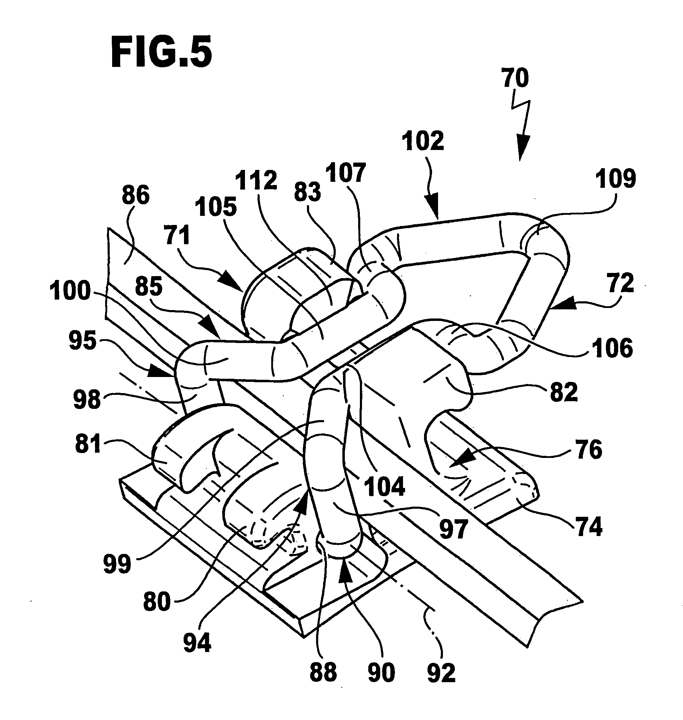

In den Figuren 4 und 5 ist eine insgesamt mit dem Bezugszeichen 70 belegte zweite Ausführungsform einer orthodontischen Befestigungsvorrichtung dargestellt, die ein Bracket 71 und einen Schwenkbügel 72 umfasst.

Das Bracket 71 weist eine Bracketbasis 74 auf sowie einen Bracketkörper 76 mit einem ersten Flügelpaar 77 und einem zweiten Flügelpaar 78. Die Flügelpaare 77, 78 umfassen jeweils einen okklusalseitigen Flügel 80 bzw. 81 und einen gingivalseitigen Flügel 82 bzw. 83. Die okklusalseitigen Flügel 80, 81 weisen eine geringere Höhe auf als die gingivalseitigen Flügel 82, 83.

Zwischen den okklusalseitigen und gingivalseitigen Flügeln 80, 81, 82, 83 erstreckt sich in mesial-distaler Richtung ein Schlitz 85, der einen Bogendraht 86 aufnimmt. Unterhalb der okklusalseitigen Flügel 80, 81 erstreckt sich parallel zur Längsrichtung des Schlitzes 85 durch den Bracketkörper 76 von dessen distaler Seite bis zu dessen mesialer Seite ein Durchgang 88, der eine Lagerhülse ausbildet und einen Lagerabschnitt 90 des Schwenkbügels 72 um dessen Längsachse drehbar lagert. Die Längsachse des Lagerabschnittes 90 definiert somit eine Schwenkachse 92 für den Schwenkbügel 72.

An das distale und an das mesiale Ende des Lagerabschnittes 90 schleißt sich jeweils ein L-förmiger Verbindungsabschnitt 94 bzw. 95 an, wobei jeweils ein erster Schenkel 97 bzw. 98 senkrecht ausgerichtet ist und ein zweiter Schenkel 99 bzw. 100 der Verbindungsabschnitte 94, 95 den Schlitz 85 übergreift. Im Unterschied zu der in den Figuren 1, 2 und 3 dargestellten orthodontischen Befestigungsvorrichtung 10 verlaufen die zweiten Schenkel 99, 100 nicht parallel zueinander, sondern sie sind einander zugewandt und übergreifen somit den Schlitz 85 schräg zu dessen Längsrichtung.

An die Verbindungsabschnitte 94, 95 schließt sich ein Rastabschnitt 102 des Schwenkbügels 72 an, der zwei senkrecht zur Schwenkachse 92 ausgerichtete Rastsegmente 104, 105 und zwei parallel zur Schwenkachse 92 ausgerichtete Rastsegmente 106, 107 aufweist sowie ein in der geschlossenen Stellung des Schwenkbügels 72 in gingivaler Richtung vom Bracketkörper 76 abstehendes Griffsegment 109. Das Griffsegment 109 ist pfeilförmig ausgestaltet und bildet ein Anzeigeelement aus zum Anzeigen der Ausrichtung der Befestigungsvorrichtung 70 relativ zur Zahnachse. Das Griffsegment 109 zeigt im dargestellten Ausführungsbeispiel in gingivale Richtung. Die senkrecht zur Schwenkachse 92 ausgerichteten Rastsegmente 104, 105 schließen sich einstückig an die zweiten Schenkel 99 bzw. 100 der Verbindungsabschnitte 94, 95 an, und an die senkrecht zur Schwenkachse 92 ausgerichteten Rastsegmente 104, 105 schließt sich jeweils ein parallel zur Schwenkachse 92 ausgerichtetes Rastsegment 106, 107 an, die ihrerseits über das Griffsegment 109 einstückig miteinander verbunden sind.

Die gingivalseitigen Flügel 82, 83 weisen einander zugewandt jeweils einen Rastvorsprung 111 bzw. 112 auf, der in der geschlossenen Stellung des Schwenkbügels 72 von einem senkrecht zur Schwenkachse 92 ausgerichteten Rastsegment 104 bzw. 105 untergriffen wird, und zusätzlich werden in der geschlossenen Stellung des Schwenkbügels 72 die freien Endbereiche der gingivalseitigen Flügel 82, 83 von den parallel zur Schwenkachse 92 ausgerichteten Rastsegmenten 106 bw. 107 untergriffen.

Mittels der Rastsegmente 104, 105, 106 und 107 kann der Schwenkbügel 72 in seiner geschlossenen Stellung mit den gingivalseitigen Flügeln 82, 83 verrastet werden, wobei in dieser Stellung der Bogendraht 86 zuverlässig im Schlitz 85 gehalten wird. Mittels des Griffsegmentes 109 kann der Schenkbügel 72 auf einfache Weise ergriffen werden. Die orthodontische Befestigungsvorrichtung 70 zeichnet sich somit auch durch eine besonders einfache Handhabung aus.

## Patentansprüche

1. Orthodontische Befestigungsvorrichtung mit einem Bracket und einem Verriegelungsteil, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordneten Flügelpaare, die jeweils einen in gingivale und einen in okklusale Richtung vom Schlitz abstehenden Flügel aufweisen, und wobei das Verriegelungsteil als Schwenkbügel ausgestaltet ist, der zwischen einer offenen, den Schlitz freigebenden Stellung und einer geschlossenen, den Schlitz übergreifenden Stellung um eine parallel zur Längsrichtung des Schlitzes ausgerichtete Schwenkachse schwenkbar am Bracket gelagert ist und der in der geschlossenen Stellung mit dem Bracket verrastbar ist, **dadurch gekennzeichnet, dass** das Bracket (11; 71) einen koaxial zur Schwenkachse (92) ausgerichteten Durchgang (44; 88) aufweist, der eine Lagerhülse ausbildet und in dem ein Lagerabschnitt (46; 90) des Schwenkbügels (12; 72) um die Schwenkachse (92) drehbar gelagert ist.

2. Befestigungsvorrichtung nach Anspruch 1, **dadurch gekennzeichnet, dass** der Lagerabschnitt (46; 90) den Durchgang (44; 88) durchgreift und dass der Schwenkbügel (12; 72) zumindest einen Verbindungsabschnitt (50, 51; 94, 95) aufweist, der sich an das distale oder das mesiale Ende des Lagerabschnittes (46; 90) anschließt und diesen mit einem mit dem Bracket (11; 71) verrastbaren Rastabschnitt (53; 102) des Schwenkbügels (12; 72) verbindet.

3. Befestigungsvorrichtung nach Anspruch 2, **dadurch gekennzeichnet, dass** der Rastabschnitt (53; 102) über einen ersten Verbindungsabschnitt (50; 94) mit dem distalen Ende und über einen zweiten Verbindungsabschnitt (51; 95) mit dem mesialen Ende des Lagerabschnitte (46; 90) verbunden ist.

4. Befestigungsvorrichtung nach Anspruch 2 oder 3, **dadurch gekennzeichnet, dass** der Rastabschnitt (53; 102) zumindest ein parallel zur Schwenkachse (92) ausgerichtetes Rastsegment (63; 106, 107) umfasst, das mit dem Bracket (11; 71) verrastbar ist.

5. Befestigungsvorrichtung nach Anspruch 4, **dadurch gekennzeichnet, dass** das mindestens eine parallel zur Schwenkachse ausgerichtete Rastsegment (63; 106, 107) zumindest mit einem Flügel (24, 25; 82, 83) verrastbar ist.

6. Befestigungsvorrichtung nach Anspruch 4, **dadurch gekennzeichnet, dass** der Rastabschnitt (53) ein einziges Rastsegment (63) ausbildet, das in der geschlossenen Stellung des Schwenkbügels (12) die beiden Flügel (24, 25) untergreift, die auf der dem Durchgang (44) abgewandten Seite des Schlitzes (27) abgeordnet sind.

7. Befestigungsvorrichtung nach Anspruch 4, **dadurch gekennzeichnet, dass** der Rastabschnitt (102) zwei parallel zur Schwenkachse (92) ausgerichtete Rastsegmente (106, 107) aufweist, die jeweils mit dem Bracket (71) verrastbar sind.

8. Befestigungsvorrichtung nach Anspruch 7, **dadurch gekennzeichnet, dass** die beiden parallel zur Schwenkachse (92) ausgerichteten Rastsegmente (106, 107) jeweils mit einem Flügel (82, 83) verrastbar sind.

9. Befestigungsvorrichtung nach einem der Ansprüche 2 bis 8, **dadurch gekennzeichnet, dass** der Rastabschnitt (102) zumindest ein senkrecht zur Schwenkachse (92) ausgerichtetes Rastsegment (104, 105) umfasst, das mit dem Bracket (71) verrastbar ist.

10. Befestigungsvorrichtung nach Anspruch 9, **dadurch gekennzeichnet, dass** das mindestens eine senkrecht zur Schwenkachse (92) ausgerichtete Rastsegment (104, 105) mit einem Flügel (82, 83) verrastbar ist.

11. Befestigungsvorrichtung nach Anspruch 9 oder 10, **dadurch gekennzeichnet, dass** das mindestens eine senkrecht zur Schwenkachse (92) ausgerichtete Rastsegment (104, 105) in der geschlossenen Stellung des Schwenkbügels (72) zwischen den beiden Flügelpaaren (77, 78) angeordnet ist.

12. Befestigungsvorrichtung nach Anspruch 9, 10 oder 11, **dadurch gekennzeichnet, dass** der Rastabschnitt (102) zwei senkrecht zur Schwenkachse (92) ausgerichtete Rastsegmente (104, 105) umfasst, die jeweils mit dem Bracket (71) verrastbar sind.

13. Befestigungsvorrichtung nach Anspruch 12, **dadurch gekennzeichnet, dass** die beiden senkrecht zur Schwenkachse (92) ausgerichteten Rastsegmente (104, 105) jeweils mit einem Flügel (82, 83) verrastbar sind.

14. Befestigungsvorrichtung nach Anspruch 13, **dadurch gekennzeichnet, dass** die beiden Flügel (82, 83), die auf der dem Durchgang (88) abgewandten Seite des Schlitzes (85) angeordnet sind, einander zugewandt jeweils einen Rastvorsprung (111, 112) aufweisen, der in der geschlossenen Stellung des Schwenkbügels (72) mit einem senkrecht zur Schwenkachse ausgerichteten Rastelement (104, 105) zusammenwirkt.

15. Befestigungsvorrichtung nach einem der voranstehenden Ansprüche, **dadurch gekennzeichnet, dass** der Schwenkbügel (72) ein Griffsegment (109) umfasst, das in der geschlossenen Stellung des Schwenkbügels (72) gingival oder okklusal vom Bracket (71) absteht.

16. Befestigungsvorrichtung nach Anspruch 15, **dadurch gekennzeichnet, dass** das Griffsegment (109) ein Anzeigeelement ausbildet zum Anzeigen der Ausrichtung der Befestigungsvorrichtung (70) relativ zur Zahnachse.

17. Befestigungsvorrichtung nach Anspruch 15 oder 16, **dadurch gekennzeichnet, dass** das Griffsegment (109) zwei Rastsegmente (106. 107) miteinander verbindet.

18. Befestigungsvorrichtung nach einem der voranstehenden Ansprüche, **dadurch gekennzeichnet, dass** der Schwenkbügel (12; 72) in sich geschlossen ist.

19. Befestigungsvorrichtung nach einem der voranstehenden Ansprüche, **dadurch gekennzeichnet, dass** das Bracket (11) zumindest ein Auflageelement (29, 30, 31) aufweist, auf dem der Schwenkbügel (12) in seiner geschlossenen Stellung aufliegt.

20. Befestigungsvorrichtung nach Anspruch 19, **dadurch gekennzeichnet, dass** das mindestens eine Auflageelement (29, 30, 31) an der distalen bzw. mesialen Außenseite eines Flügels (22, 23, 24) angeordnet ist.

21. Befestigungsvorrichtung nach Anspruch 20, **dadurch gekennzeichnet, dass** das mindestens eine Auflageelement (29, 30, 31) eine Auflagefläche (33, 34, 35) aufweist, die um die Materialstärke des Schwenkbügels (12) gegenüber der Oberseite (37, 38, 39, 40) des unmittelbar benachbarten Flügels (22, 23, 24) zurückgesetzt ist.

22. Befestigungsvorrichtung nach Anspruch 19, 20 oder 21, **dadurch gekennzeichnet, dass** das Bracket (11) zumindest zwei Auflageelemente (29, 30, 31) aufweist, die an den einander abgewandten Außenseiten zweier Flügel (22, 23, 24, 25) angeordnet sind.

23. Befestigungsvorrichtung nach einem der Ansprüche 19 bis 22, **dadurch gekennzeichnet, dass** an der distalen bzw. mesialen Außenseite jedes Flügels (22, 23, 24, 25) ein Auflageelement (29, 30, 31) angeordnet ist.

24. Befestigungsvorrichtung nach einem der Ansprüche 19 bis 23, **dadurch gekennzeichnet, dass** das mindestens eine Auflageelement (29, 30, 31) einstückig mit dem Bracketkörper (17) verbunden ist.

25. Befestigungsvorrichtung nach einem der voranstehenden Ansprüche, **dadurch gekennzeichnet, dass** sich der Durchgang (44) bezogen auf die mesial-distale Richtung lediglich im Bereich zwischen den beiden Flügelpaaren (19, 20) erstreckt.

26. Befestigungsvorrichtung nach einem der Ansprüche 1 bis 24, **dadurch gekennzeichnet, dass** sich der Durchgang (88) bezogen auf die mesial-distale Richtung im Bereich zwischen den einander abgewandten Außenseiten der beiden Flügelpaare (77, 78) erstreckt.
